# EUROPÄISCHE PATENTSCHRIFT

(11) **EP 1 504 548 B1**
(45) Veröffentlichungstag und Bekanntmachung des Hinweises auf die Patenterteilung: **08.10.2008**
(21) Anmeldenummer: 03735299.4
(22) Anmeldetag: 13.05.2003
(51) Int. Cl.: H04B 10/22

(54) **VORRICHTUNG ZUR OPTISCHEN SIGNAL BERTRAGUNG ZWISCHEN ZWEI GE GENEINANDER BEWEGLICHEN EINHEITEN**
DEVICE FOR OPTICALLY TRANSMITTING SIGNALS BETWEEN TWO UNITS MOVING RELATIVE TO ONE ANOTHER
DISPOSITIF POUR TRANSMETTRE DES SIGNAUX OPTIQUES ENTRE DEUX UNITES MOBILES L'UNE PAR RAPPORT A L'AUTRE

(30) Priorität: 16.05.2002 DE 10222221
(43) Veröffentlichungstag der Anmeldung: 09.02.2005
(73) Patentinhaber: Schleifring und Apparatebau GmbH, 82256 Fürstenfeldbruck (DE)
(72) Erfinder: SCHILLING, Harry, 85072 Eichstätt (DE)
(74) Vertreter: Lohr, Georg
(86) Internationale Anmeldenummer: PCT/DE2003/001535
(87) Internationale Veröffentlichungsnummer: WO 2003/098846

(56) Entgegenhaltungen:
- US-A- 4 330 870
- US-A- 5 015 057
- US-A- 5 297 225
- PATENT ABSTRACTS OF JAPAN vol. 008, no. 004 (E-220), 10. Januar 1984 (1984-01-10) & JP 58 171137 A (OKI DENKI KOGYO KK), 7. Oktober 1983 (1983-10-07)
- PATENT ABSTRACTS OF JAPAN vol. 008, no. 229 (E-273), 20. Oktober 1984 (1984-10-20) & JP 59 110232 A (FUJITSU KK), 26. Juni 1984 (1984-06-26)
- PATENT ABSTRACTS OF JAPAN vol. 008, no. 229 (E-273), 20. Oktober 1984 (1984-10-20) & JP 59 111432 A (NIPPON DENKI KK), 27. Juni 1984 (1984-06-27)

## Beschreibung

### Technisches Gebiet

Die Erfindung betrifft eine Vorrichtung zur optischen Übertragung von Daten mittels Lichtleitern, wobei Sender und/oder Empfänger entlang eines Lichtleiters bewegt oder unterschiedlich positioniert werden können.

Derartige vorrichtungen werden beispielsweise in einer linearen Ausführung in Krananlagen oder anderen Fördersystemen zur Datenübertragung zwischen dem beweglichen Kran und einer stationären Steuereinheit eingesetzt. Ein anderes Anwendungsgebiet dieser Datenübertragungssysteme in einer kreisförmigen Ausführung ist die Übertragung zwischen gegeneinander drehbaren Teilen wie beispielsweise in einem Computertomografen zwischen dem Rotor, welcher die Röntgenröhre sowie den Detektor trägt, und einer stationären Auswerteeinheit, welche die Bilddaten verarbeitet und anzeigt.

### Stand der Technik

Bei dem Stand der Technik entsprechenden, auf Lichtleitern basierenden Übertragungssystemen wird an einem Ende des Lichtleiters Licht eingekoppelt, welches dann durch den Lichtleiter bis zu dessen anderem Ende geführt wird und dort durch einen entsprechenden Empfänger wieder ausgewertet wird. Darauf basierend ist eine Vielzahl unterschiedlicher varianten bekannt, welche die gleichzeitige Übertragung mehrerer Wellenlängen mittels Filtern oder auch die Übertragung zu mehreren verschiedenen Orten beispielsweise mittels Y-Kopplern ermöglichen. Derartige Systeme sind allerdings nicht geeignet, um Signale an beliebigen Positionen einer lichtleitenden Faser seitlich ein- bzw. auszukoppeln. Hierfür sind verschiedene andere Technologien bekannt.

Eine solche Vorrichtung ist in der US-Patentschrift 5,297,225 beschrieben. Hier wird durch von außen angebrachte Kerben in dem lichtleitenden Medium von außen eingekoppeltes Licht durch Reflexion in solchen Winkeln abgelenkt, dass es in dem Medium geführt werden kann. Eine solche Übertragungsvorrichtung ist sinnvoll einsetzbar, wenn eine Einkopplung an fest vorgegebenen Positionen erfolgen soll. Grundsätzlich ist es auch für die Übertragung zwischen beweglichen Einheiten einsetzbar, da die Licht ein- bzw. Auskopplung berührungslos erfolgt. Wird allerdings eine größere Bewegungsstrecke gefordert, wie dies bei Krananlagen oder auch Drehübertragungssystemen großer Durchmesser der Fall ist, so ergibt sich durch die vielen Kerben entlang des lichtleitenden Mediums eine sehr hohe Dämpfung. Dadurch werden an die Dynamik des Empfängers extreme Anforderungen gestellt. Eine typische Dämpfung diese Anordnung von ca. 10 dB pro Meter überfordert bei einer Streckelänge von einigen Metern herkömmliche optische Empfänger. Somit ist dieses Übertragungssystem bei längeren Übertragungsstrecken nur mit besonders teuren und aufwändigen optischen Komponenten realisierbar.

Da die technischen Funktionsprinzipien zur Drehübertragung sowie zur linearen bzw. kurvenförmigen Übertragung dieselben sind, wird in den folgenden Ausführungen nicht weiter zwischen diesen unterschieden. Die Begriffe werden synonym verwendet. Weiterhin wird auch nicht zwischen den Begriffen Lichtwellenleiter und Lichtleiter unterschieden, da zwar bevorzugt Lichtwellenleiter in der technischen Realisierung eingesetzt werden, aber deren Funktionen in Bezug auf die Erfindung vergleichbar sind. So ist zur Übertragung beispielsweise auch ein Lichtleiter, welcher im wesentlichen durch einen Graben mit verspiegelter Oberfläche gebildet wird, geeignet. Ein solcher Lichtleiter ist in der US-Patentschrift 4,525,025 offenbart.

### Darstellung der Erfindung

Der Erfindung liegt die Aufgabe zugrunde, ein optisches Datenübertragungssystem bereitzustellen, das auch bei Übertragungsmedien mit hohen Dämpfungen nur geringe Anforderungen an die Dynamik der optischen Empfänger stellt.

Eine erfindungsgemäße Lösung dieser Aufgabe ist im Patentanspruch 1 angegeben. Weiterbildungen der Erfindung sind Gegenstand der abhängigen Ansprüche.

Die erfindungsgemäße Vorrichtung zur Übertragung umfasst mindestens eine erste Einheit (1), welche einen entlang der Bahn der Bewegung angeordneten Lichtleiter (3) aufweist. Weiterhin ist mindestens eine zweite Einheit (2) vorgesehen, welche einen entlang des Lichtleiters (3) beweglichen Koppler (4) zur Ein- bzw. Auskopplung optischer Signale in bzw. aus dem Lichtleiter (3) aufweist. Die Erzeugung des Lichtes erfolgt mittels mindestens einer Lichtquelle (5). Das durch die Vorrichtung übertragene Licht wird schließlich einer Lichtsenke (6) zugeführt.

Die Funktionsweise der erfindungsgemäßen Vorrichtung ist unabhängig von der Übertragungsrichtung des Lichts. Daher können eine oder mehrere Lichtquellen (5) bzw. eine oder mehrere Lichtsenken (6) wahlweise der ersten Einheit oder auch der zweiten Einheit zugeordnet werden. Somit sind grundsätzlich zwei optische Pfade realisierbar.

Im ersten optischen Pfad koppelt die Lichtquelle (5) Licht in den Lichtleiter (3) der ersten Einheit (1) ein. Dieses Licht wird mit einem Koppler (4) der zweiten Einheit (2) ausgekoppelt und einer Lichtsenke (6) zugeführt. Hier können auch wahlweise mehrere Koppler (4) für weitere optische Pfade vorgesehen sein. Diese weiteren optische Pfade sind entsprechend dem ersten optischen Pfad ausgeführt und werden daher nicht weiter ausdrücklich erwähnt, sie sollen aber als mit eingeschlossen gelten. Ebenso können auch an weiteren Enden des Lichtleiters (3) weitere Lichtquellen (5) angeordnet sein.

Der zweite optische Pfad umfasst eine Lichtquelle (5), welche mittels eines Kopplers (4) der zweiten Einheit (2) Licht in den Lichtleiter (3) der ersten Einheit (1) einkoppelt. Dieses Licht wird nun durch den Lichtleiter (3) zu mindestens einer Lichtsenke (6) geführt.
Auch in dieser von der Erfindung sind mehrere Koppler (4) einsetzbar, welche Licht von einer oder mehreren Lichtquellen (5) in den Lichtleiter einkoppeln. Da auch diese Übertragungswege entsprechend einem einfachen Übertragungsweg sind, werden diese im weiteren nicht mehr ausdrücklich erwähnt, sie sollen aber als mit eingeschlossen gelten.

Die Wirkungsmechanismen der optischen Übertragung in den unterschiedlichen optischen Pfaden sind meist gleich, jedoch für die vorliegende Erfindung nicht relevant. Daher wird zwischen den verschiedenen optischen Pfaden nicht unterschieden.

Erfindungsgemäß ist mindestens ein variables optisches Dämpfungsglied (8) in einem optischen Pfad (7) vorgesehen. Dieses optische Dämpfungsglied hält die optische Dämpfung des optischen Pfades einem vorgegebenen Toleranzbereich. Somit ist die Dämpfung des optischen Pfades zumindest weitgehend unabhängig von mechanischen Bewegungen der ersten Einheit zur zweiten Einheit. Es werden daher an die Dynamik der optischen Empfänger wesentlich geringere Anforderungen gestellt.

Die erfindungsgemäße Vorrichtung weist somit gegenüber dem Stand der Technik in allen Betriebszuständen eine höhere aber konstante Durchgangsdämpfung auf.

Selbstverständlich können für verschiedene Signalpfade verschiedene Dämpfungsglieder, wahlweise auch mit unterschiedlichen Dämpfungen vorgesehen werden. So ist beispielsweise im Falle der Übertragung mit unterschiedlichen Wellenlängen jeweils eine Dämpfung entsprechend den optimalen Übertragungseigenschaften dieser Wellenlänge realisierbar.

In einer weiteren vorteilhaften Ausgestaltung der Erfindung ist ein variables optisches Dämpfungsglied (8) vorgesehen, welches die optische Dämpfung des optischen Pfades auf einem vorgegebenen konstanten Wert hält.

In einer weiteren vorteilhaften Ausgestaltung der Erfindung ist eine Steuereinheit (9) vorgesehen, welche das optische Dämpfungsglied (8) derart einstellt, dass die optische Dämpfung des optischen Pfades (7) in einem vorgegebenen Toleranzbereich liegt. Durch den Einsatz einer solchen Steuereinheit sind auch aktive bzw. steuerbare optische Dämpfungsglied einsetzbar.

Eine andere Ausgestaltung der Erfindung sieht vor, dass mindestens eine Lichtquelle (5) Mittel zur elektrischen Steuerung der von ihr abgegebenen optischen Leistung aufweist. Diese werden mittels einer Steuereinheit (9) derart angesteuert, dass die optische Leistung am Eingang der Lichtsenke (6) des zugeordneten optischen Pfades in einem vorgegebenen Toleranzbereich liegt. Vorzugsweise liegt die optische Leistung auf einem konstanten Wert.

In einer weiteren vorteilhaften Ausgestaltung der Erfindung ist mindestens eine Lichtsenke (6) als Wandler optischer Signale in elektrische Signale ausgelegt. Diese weist weiterhin Mittel zur elektrischen Steuerung der elektrischen Empfindlichkeit bzw. Verstärkung auf und wird mittels einer Steuereinheit (9) derart angesteuert, dass die elektrische Signalamplitude in einem vorgegebenen Toleranzbereich liegt. Vorzugsweise liegt die Signalamplitude auf einem konstanten Wert.

Eine dieser Erfindung zugrunde liegende Steuereinheit kann mechanisch, beispielsweise als Zahnradgetriebe, oder auch pneumatisch, bevorzugt aber elektrisch bzw. elektronisch ausgeführt werden.

In einer weiteren vorteilhaften Ausgestaltung der Erfindung ist mindestens ein variables optisches Dämpfungsglied (8) als optisch aktives Medium ausgeführt. Ein solches optische aktives Medium ändert entsprechend der einfallenden Lichtintensität seine Dämpfung. Dabei wird bei hoher Lichtintensität eine hohe Dämpfung und bei niedriger Lichtintensität eine niedrige Dämpfung erzielt.

In einer anderen Ausgestaltung der Erfindung ist mindestens ein variables optisches Dämpfungsglied als Blende, wie sie beispielsweise bei Kameraobjektiven eingesetzt wird, ausgeführt. Derartige Blenden sind einfach und Kostengünstig herstellbar. Eine Vielzahl unterschiedlicher Steuerorgane sind fertig entwickelt auf dem Markt verfügbar.

In einer weiteren vorteilhaften Ausgestaltung der Erfindung ist mindestens ein optisches Dämpfungsglied (8) als Graukeil realisiert. Der Graukeil wird entsprechend der benötigten Dämpfung in den Strahlengang eingebracht. Dies kann beispielsweise mit einer linearen oder rotierenden mechanischen Bewegung realisiert sein. Ebenso sind hier Mikromechanischen Elemente einsetzbar

Eine weitere Ausgestaltung der Erfindung sieht vor, dass mindestens ein variables optisches Dämpfungsglied (8) als doppelbrechendes Element realisiert ist. Derartige Doppelbrechende Elemente können beispielsweise LCDs (Liquid Crystal Displays) sein. Die Dämpfung kann hier durch Absorption, Ablenkung oder Polarisation des Lichtes erfolgen.

Weitere Möglichkeiten zur Realisation von veränderbaren Dämpfungsgliedern bestehen im Einsatz von steuerbaren Streuzentren, welche z.B. auf photorefraktiven oder photoadressierbaren Materialien oder auch auf Materialien, welche durch äußere Felder veränderbare Materialeigenschaften aufweisen, basieren. Ebenso können Materialien mit steuerbarem Brechungsindex oder Materialien mit steuerbarer Transmission eingesetzt werden. Derartige Materialien können beispielsweise photorefraktiv oder photoadressierbar sein oder auch durch äußere Felder bzw. Energiezufuhr veränderbare Materialeigenschaften aufweisen. Die Steuerung der Dämpfung kann beispielsweise durch Variation von äußeren elektromagnetischen Feldern erfolgen.

Die hier beschriebenen Materialien können in einer getrennten Dämpfungseinrichtung oder auch in den Lichtleiter selbst zur Dämpfung integriert sein. Besonders vorteilhaft ist das Anbringen der Dämpfungselemente in oder an der Grenzschicht der Faser. Hierzu werden in den Faserkern oder an den Grenzflächen zum Mantel Partikel eingebracht, die sich von außen z. B. durch elektromagnetischen Wellen in ihren Eigenschaften wie Brechungsindex oder Transmission steuern lassen.

Auch durch das Anbringen eines steuerbaren Gitters an der Fasergrenzschicht kann die Dämpfung der Faser gesteuert werden.

Die Partikel oder Gitter können über die ganze Faser verteilt oder wahlweise an bestimmten, diskreten Stellen angeordnet sein.

Grundsätzlich kann bei allen hier vorgestellten Ausführungsformen neben einer kontinuierlich einstellbaren Dämpfung auch eine in vorgegebenen Stufen einstellbare Dämpfung vorgesehen werden. Dies kann beispielsweise durch in Stufen schaltbares Dämpfungsglied erreicht werden.

In einer weiteren vorteilhaften Ausgestaltung der Erfindung ist die Steuereinheit zur Steuerung abhängig von der relativen Position der ersten Einheit gegenüber der zweiten Einheit ausgelegt. Bei den meisten bekannten Übertragungsstrecken ist die Dämpfung ausschließlich abhängig von dem relativen Abstand der ersten und zweiten Einheit. Diese Dämpfung als Funktion des Abstandes kann nun Messtechnisch oder rechnerisch ermittelt werden und zur Steuerung herangezogen werden. Zur Erfassung der Position kann beispielsweise ein Positionsencoder oder Winkelencoder eingesetzt werden.

Eine weitere Ausgestaltung der Erfindung besteht darin, dass die Steuereinheit durch eine Rückkopplung in eine Regelschleife zur Regelung der Ausgangsgröße eingebunden ist. Durch die Ausgestaltung zur Regelschleife kann eine konstante Übertragungscharakteristiken der ganzen Übertragungsstrecke auch unabhängig von anderen Parametern wie Temperatur, Alterung etc. erreicht werden.

In einer weiteren vorteilhaften Ausgestaltung der Erfindung ist die Steuereinheit (9) als mechanische Einheit ausgebildet. Dies kann beispielsweise ein Zahnradgetriebe sein. So kann beispielsweise im Falle eines Computertomografens ein auf einer rotierenden Scheibe angeordneter Graukeil mittels eines Zahnradgetriebes synchron zu Bewegung des Rotors bewegt werden.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.

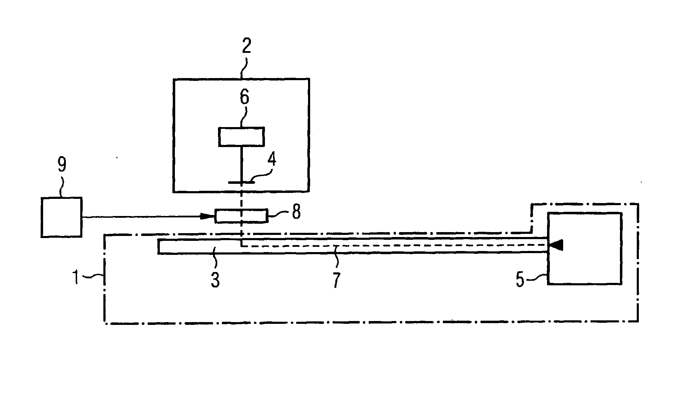

Fig. 1 zeigt in allgemeiner Form schematisch eine erfindungsgemäße Vorrichtung.

Eine erste Einheit (1) weist hier beispielhaft einen linear angeordneten Lichtleiter (3) auf. Entlang diesem Lichtleiter beweglich ist die zweite Einheit (2) angeordnet. Zu optischen Signalübertragung umfasst die erste Einheit (1) eine Lichtquelle (5), welche optische Signale in den Lichtleiter (3) einkoppelt. Diese werden entlang des Lichtleiters (3) geführt und an der Position der zweiten Einheit (2) im diese ausgekoppelt. Die Auskopplung erfolgt mittels eines Kopplers (4), welcher das ausgekoppelte Licht in eine Lichtsenke (6) überträgt. Dieser optische Pfad von der Lichtquelle (5) zur Lichtsenke (6) ist als punktierte Linie (7) dargestellt. Weiterhin ist in dem optischen Pfad ein variables optisches Dämpfungsglied (8) vorgesehen, welches die Dämpfung des gesamten optischen Pfades auf einem konstanten Wert bzw. in einem vorgegebenen Toleranzbereich hält. Das variabel Dämpfungsglied kann wahlweise der ersten Einheit oder auch der zweiten Einheit zugeordnet sein. Zur Steuerung des Dämpfungsgliedes ist eine Steuereinheit (9) vorgesehen, welche dem Dämpfungsglied die notwendige Dämpfungseinstellung signalisiert.

### Bezugszeichenliste

- 1: Erste Einheit
- 2: Zweite Einheit
- 3: Lichtleiter
- 4: Koppler
- 5: Lichtquelle
- 6: Lichtsenke
- 7: optischer Pfad
- 8: optisches Dämpfungsglied
- 9: Steuereinheit

## Patentansprüche

1. Vorrichtung zur Übertragung optischer Signale zwischen wenigstens zwei gegeneinander drehbaren Einheiten (1, 2) umfassend
- eine erste Einheit (1), welche einen entlang der Bahn der Bewegung angeordneten Lichtleiter (3) aufweist und
- eine zweite Einheit (2), welche einen entlang des Lichtleiters (3) beweglichen Koppler (4) zur Ein- bzw. Auskopplung optischer Signale in bzw. aus dem Lichtleiter (3) aufweist, sowie
- mindestens eine Lichtquelle (5) und
- mindestens eine Lichtsenke (6),
- mindestens einen optischer Pfad (7) zwischen der mindestens einen Lichtquelle (5) und der mindestens einen Lichtsenke (6), wobei der mindestens einen Lichtquelle bzw. der mindestens einen Lichtsenke wahlweise der ersten Einheit bzw. zweiten Einheit zugeordnet sind,
**dadurch gekennzeichnet, dass**
mindestens ein variables optisches Dämpfungsglied (8) in dem mindestens einen optischen Pfad (7), sowie eine Steuereinheit (9) vorgesehen ist, welche das mindestens einen optische Dämpfungsglied (8) derart einstellt, dass die optische Dämpfung des mindestens einen optischen Pfades (7) in einem vorgegebenen Toleranzbereich liegt und die Steuereinheit zur Steuerung abhängig von der relativen Position der ersten Einheit gegenüber der zweiten Einheit ausgelegt ist, wobei die messtechnisch oder rechnerisch ermittelte Dämpfung als Funktion des Abstandes zur Steuerung herangezogen wird.

2. Vorrichtung nach dem Oberbegriff des Anspruchs 1,
**dadurch gekennzeichnet, dass**
mindestens eine Lichtquelle (5) Mittel zur elektrischen Steuerung der abgegebenen optischen Leistung aufweist und eine Steuereinheit (9) vorgesehen ist, welche die optische Leistung der Lichtquelle derart steuert, dass die optische Leistung am Eingang der Lichtsenke (6) des zugeordneten optischen Pfades in einem vorgegebenen Toleranzbereich liegt und die Steuereinheit zur Steuerung abhängig von der relativen Position der ersten Einheit gegenüber der zweiten Einheit ausgelegt ist, wobei die messtechnisch oder rechnerisch ermittelte Dämpfung als Funktion des Abstandes zur Steuerung herangezogen wird.

3. Vorrichtung nach einem der vorhergehenden Ansprüche,
**dadurch gekennzeichnet, dass**
mindestens eine Lichtsenke (6) als Wandler optischer Signale in elektrische Signale ausgelegt ist und Mittel zur elektrischen Steuerung der elektrischen Empfindlichkeit bzw. Verstärkung aufweist und weiterhin eine Steuereinheit (9) vorgesehen ist, welche die elektrischen Empfindlichkeit bzw. Verstärkung der Lichtsenke derart steuert, dass die elektrische Signalamplitude in einem vorgegebenen Toleranzbereich liegt und die Steuereinheit zur Steuerung abhängig von der relativen Position der ersten Einheit gegenüber der zweiten Einheit ausgelegt ist, wobei die messtechnisch oder rechnerisch ermittelte Dämpfung als Funktion des Abstandes zur Steuerung herangezogen wird.

4. Vorrichtung nach Anspruch 1,
**dadurch gekennzeichnet, dass**
mindestens ein variables optisches Dämpfungsglied (8) als optisch aktives Medium ausgeführt ist, welches entsprechend der einfallenden Lichtintensität seine Dämpfung ändert.

5. Vorrichtung nach Anspruch 1,
**dadurch gekennzeichnet, dass**
mindestens ein variables optisches Dämpfungsglied (8) als optische Blende, wie sie beispielsweise bei Kameraobjektiven eingesetzt wird, ausgeführt ist.

6. Vorrichtung nach Anspruch 1,
**dadurch gekennzeichnet, dass**
mindestens ein variables optisches Dämpfungsglied (8) als Graukeil, welcher entsprechend der benötigten Dämpfung in den Strahlengang eingebracht wird, realisiert ist.

7. Vorrichtung nach Anspruch 1,
**dadurch gekennzeichnet, dass**
mindestens ein variables optisches Dämpfungsglied (8) als doppelbrechendes Element, beispielsweise als LCD, realisiert ist.

8. Vorrichtung nach einem der Ansprüche 2 bis 4,
**dadurch gekennzeichnet, dass**
die Steuereinheit durch eine Rückkopplung in eine Regelschleife zur Regelung der Ausgangsgröße eingebunden ist.

9. Vorrichtung nach Anspruch 2,
**dadurch gekennzeichnet, dass**
die Steuereinheit ein mechanisches Getriebe aufweist.

## Claims

1. Apparatus for transmitting optical signals between at least two units (1, 2) that are rotatable relative to each other, comprising:
- a first unit (1) having an optical waveguide (3) disposed along the path of the motion, and
- a second unit (2) having a coupler (4) movable along the optical waveguide (3) for coupling optical signals into and out of the optical waveguide (3), and also
- at least one light source (5), and
- at least one light sink (6),
- at least one optical path (7) between the at least one light source (5) and the at least one light sink (6), with the at least one light source or the at least one light sink being optionally associated with the first unit or second unit,
**characterized in that**
at least one variable optical attenuator (8) is provided in the at least one optical path (7), and a control unit (9) is provided for setting the at least one optical attenuator (8) so that the optical attenuation of the at least one optical path (7) lies within a predetermined tolerance range, and the control unit is adapted for control in dependence upon the position of the first unit relative to the second unit, with the attenuation as determined by measurement or calculation being used as a function of the distance for control purposes.

2. Apparatus according to the preamble of claim 1,
**characterized in that**
at least one light source (5) comprises means for electrical control of the emitted optical power, and a control unit (9) is provided which controls the optical power of the light source so that the optical power at the input of the light sink (6) of the associated optical path lies within a predetermined tolerance range, and the control unit is adapted for control in dependence upon the position of the first unit relative to the second unit, with the attenuation as determined by means of measurement or calculation being used as a function of the distance for control purposes.

3. Apparatus according to any one of the preceding claims,
**characterized in that**
at least one light sink (6) is designed to be a converter of optical signals to electrical signals and comprises means for electrical control of the electrical sensitivity or amplification, and furthermore a control unit (9) is provided which controls the electrical sensitivity or amplification of the light sink in such a way that the electrical signal amplitude lies within a predetermined tolerance range, and the control unit is adapted for controlling in dependence upon the position of the first unit relative to the second unit, with the attenuation as determined by measurement or calculation being used as a function of distance for control purposes.

4. Apparatus according to claim 1,
**characterized in that**
at least one variable optical attenuator (8) is designed to be an optically active medium which changes its attenuation according to the incident light intensity.

5. Apparatus according to claim 1,
**characterized in that**
at least one variable optical attenuator (8) is designed to be an optical diaphragm as used in camera lenses, for example.

6. Apparatus according to claim 1,
**characterized in that**
at least one variable optical attenuator (8) is designed to be a neutral wedge filter which is introduced into the beam path according to the required attenuation.

7. Apparatus according to claim 1,
**characterized in that**
at least one variable optical attenuator (8) is designed to be a doubly-refracting element, for example an LCD.

8. Apparatus according to any one of claims 2 to 4,
**characterized in that**
the control unit is included by feedback into a closed control loop for regulating the output variable.

9. Apparatus according to claim 2,
**characterized in that**
the control unit comprises a mechanical transmission system.

## Revendications

1. Dispositif pour la transmission de signaux optiques entre au moins deux unités (1, 2) pouvant tourner l'une par rapport à l'autre, comprenant
- une première unité (1), qui possède un guide d'ondes lumineuses (3) disposé le long de la trajectoire de déplacement, et
- une deuxième unité (2), qui possède un coupleur (4) mobile le long du guide d'ondes lumineuses (3) pour le couplage et le découplage de signaux optiques dans et hors du guide d'ondes lumineuses (3), ainsi que
- au moins une source de lumière (5) et
- au moins un puits de lumière (6),
- au moins un trajet optique (7) entre l'au moins une source de lumière (5) et l'au moins un puits de lumière (6), l'au moins une source de lumière et l'au moins un puits de lumière étant associés au choix à la première unité ou à la deuxième unité,
**caractérisé en ce qu'**au moins un élément d'atténuation optique variable (8) est prévu dans l'au moins un trajet optique (7), ainsi qu'une unité de commande (9) qui règle l'au moins un élément d'atténuation optique (8) de telle manière que l'atténuation optique de l'au moins un trajet optique (7) se situe dans une plage de tolérances prédéterminée et l'unité de commande est conçue pour une commande en fonction de la position relative de la première unité par rapport à la deuxième unité, l'atténuation déterminée par les systèmes de mesure et de calcul en fonction de la distance étant utilisée pour la commande.

2. Dispositif selon le préambule de la revendication 1, **caractérisé en ce qu'**au moins une source de lumière (5) comporte des moyens pour la commande électrique de la puissance optique délivrée et il est prévu une unité de commande (9) qui régule la puissance optique de la source de lumière de telle manière que la puissance optique à l'entrée du puits de lumière (6) du trajet optique associé se situe dans une plage de tolérance prédéterminée et l'unité de commande est conçue pour une commande en fonction de la position relative de la première unité par rapport à la deuxième unité, l'atténuation déterminée par les systèmes de mesure et de calcul en fonction de la distance étant utilisée pour la commande.

3. Dispositif selon l'une des revendications précédentes, **caractérisé en ce qu'**au moins un puits de lumière (6) est conçu comme convertisseur de signaux optiques en signaux électriques et comporte des moyens de régulation électrique de la sensibilité électrique ou de l'amplification et il est en outre prévu une unité de commande (9) qui régule la sensibilité électrique ou l'amplification du puits de lumière de telle manière que l'amplitude des signaux électriques se situe dans une plage de tolérances prédéterminée et l'unité de commande est conçue pour une commande en fonction de la position relative de la première unité par rapport à la deuxième unité, l'atténuation déterminée par les systèmes de mesure et de calcul en fonction de la distance étant utilisée pour la commande.

4. Dispositif selon la revendication 1, **caractérisé en ce qu'**au moins un élément d'atténuation optique variable (8) est conçu comme un milieu optiquement actif, dont l'atténuation change en fonction de l'intensité lumineuse incidente.

5. Dispositif selon la revendication 1, **caractérisé en ce qu'**au moins un élément d'atténuation optique variable (8) est conçu comme un obturateur optique, tel qu'il est utilisé par exemple dans les objectifs des caméras.

6. Dispositif selon la revendication 1, **caractérisé en ce qu'**au moins un élément d'atténuation optique variable (8) est conçu comme un coin neutre, qui est inséré dans le trajet des rayons en fonction de l'atténuation nécessaire.

7. Dispositif selon la revendication 1, **caractérisé en ce qu'**au moins un élément d'atténuation optique variable (8) est conçu comme un élément biréfringent, par exemple comme un afficheur à cristaux liquides.

8. Dispositif selon l'une des revendications 2 à 4, **caractérisé en ce que** l'unité de commande est intégrée par un couplage de rétroaction dans une boucle de régulation pour la régulation de la grandeur de sortie.

9. Dispositif selon la revendication 2, **caractérisé en ce que** l'unité de commande présente un engrenage mécanique.
